Europäisches Patentamt

European Patent Office

Office européen des brevets

(11) Publication number: **0 208 504**
**A2**

(12) **EUROPEAN PATENT APPLICATION**

(21) Application number: 86305128.0

(22) Date of filing: 02.07.86

(51) Int. Cl.⁴: **G 02 F 1/015**
**H 01 L 31/02**

(30) Priority: 11.07.85 GB 8517534

(43) Date of publication of application:
14.01.87 Bulletin 87/3

(84) Designated Contracting States:
BE DE FR IT NL

(71) Applicant: STC plc
10, Maltravers Street
London, WC2R 3HA(GB)

(72) Inventor: Kirkby, Paul Anthony
42, St Johsn Avenue
Old Harlow Essex CM17 0BB(GB)

(74) Representative: Laurence, Simon French et al,
STC Patent Department Edinburgh Way
Harlow Essex CM20 2SH(GB)

(54) Fibre optic network component.

(57) A component forming a node of an optical fibre network is constituted by a doping superlattice device (11) interposed between the coupled ends of two optical fibres (16, 17), this device (11) functioning as a transmissive detector and modulator.

Fig.1.

EP 0 208 504 A2

## FIBRE OPTIC NETWORK COMPONENT

This invention relates to components for fibre-optic networks.

One way of distributing optical power between the modes of a fibre-optic network is to wire the nodes in a star configuration. In this type of configuration an optical output from the optical source at any particular node is fed into a mixer element for distribution among a set of fibres which feed detectors at all the other nodes. The number of nodes that can be accommodated by such a system is limited because an increase in their number automatically entails a reduction in the share of the power transmitted from any one mode that will be available for reception by any one of the other nodes.

An alternative way of distributing power around the nodes of a network is to adopt a ring configuration in which the nodes are connected in series around the ring. A node in a conventional design of ring configuration is like that of a node in a star configuration in having its own source and its own detector, but, particularly in the case of a ring system node whose detector is arranged to intercept all the circulating optical power, the node will also include a regenerator for the onward transmission of optical data that is not destined for that node. If the detector of such a node intercepts all the circulating power, then, if there is a malfunction at this node, the whole of the downstream part of the ring is disabled. To avoid this sort of problem the node may incorporate an optical bypass which is designed to arrange that only a fraction of the circulating optical power is tapped off the ring and fed to the detector. The optical signals generated at this mode then have to be tapped into the ring. Therefore it is seen that bypass of this sort is useful in protecting against failure of the whole ring in the event of certain kinds of malfunction at a single node, but that this protection is achieved at the expense of a significant increase of attenuation.

The present invention is concerned with a component that may be used at selected nodes in serial type networks and has the characteristic that it is capable of functioning both as a photodetector and a variable attenuation optical modulator, and the further characteristic that it is a relatively low attenuation device in its quiescent unpowered state. Such a component will hereafter be referred to as a 'transmissive detector and modulator' (TDAM) components. A fibre optic ring system may be provided that has at least one, and possibly several nodes, each provided with an electro-optic source and an electro-optic detector, and has, between these nodes, one or more other (series connected) nodes each provided by one of these TDAM components.

According to the present invention there is provided an optical fibre network component for connection between an electro-optical source and a detector, which component includes an optical fibre coupling in which the end of one optical fibre is optically coupled with the end of another through the layers of a multi-layer semiconductive device having a stack of electrically commoned sub-micron thickness p-type layers interleaved with a stack of electrically commoned sub-micron thickness n-type layers, said device constituting a transmissive detector and modulator (TDAM).

Such a device typically takes the form of a single crystal doping superlattice semiconductor device.

Optionally the final detector of the network may also be constituted by a TDAM device operated solely as a detector. Indeed for some applications, such as an optical fibre TV distribution network, all the TDAM devices may be operated solely as detectors.

The invention also resides in an optical fibre network incorporating one or more optical fibre components of the type defined in the preceding paragraph.

There follows a description of an optical fibre network component embodying the invention in a preferred form, and of the use of such components in an optical fibre ring network. The description refers to the accompanying drawings in which:-

Figure 1 is a schematic representation of a doping superlattice TDAM device inserted between the closely spaced ends of a pair of optical fibres.

Figure 2 is a diagram of an optical fibre ring network incorporating at all but two of its modes TDAM devices of the type illustrated in Figure 1, and

Figures 3 and 4 depict respectively the detector mode and modulator mode characteristics of the device of Figure 1.

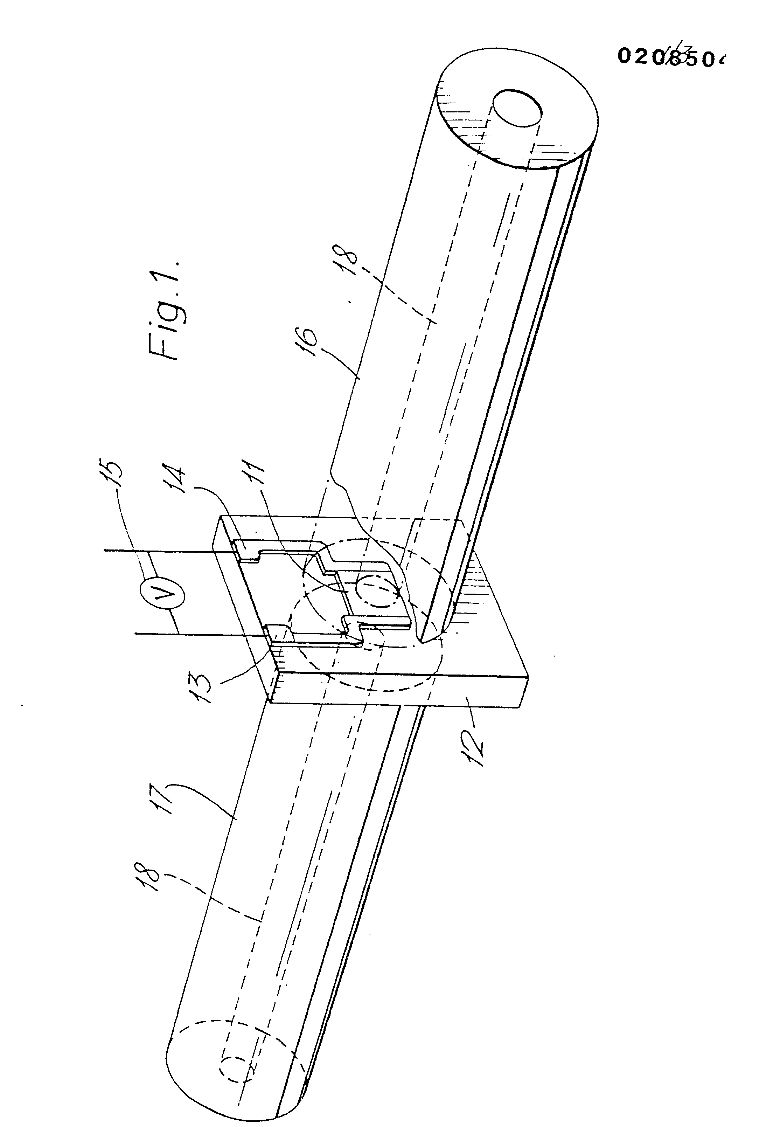

Referring now to Figure 1, a doping superlattice TDAM device is provided that consists of a stack 11 of alternate p- and n-type layers supported on a substrate 12, and having a p-type contact 13 extending down one side edge of the stack and a n-type contact 14 extending down the opposite edge. A voltage source schematically depicted at 15 is connected across the contacts. Doping superlattice devices have been described for instance by Y. Horikoshi and K. Ploog in the paper entitled 'New Photoconductive Detector Based on Doping Superlattices with High-Speed Response over a Wide Energy Range', published in Extended Abstracts of

the 16th (1984 International) Conference on Solid state Devices and Materials, Kobe, 1984, pp 571-574. Butted against the face of the stack is the end of an optical fibre 16, and on the opposite side of the device is butted the end of a second optical fibre 17, with the fibre cores 18 in registry with each other.

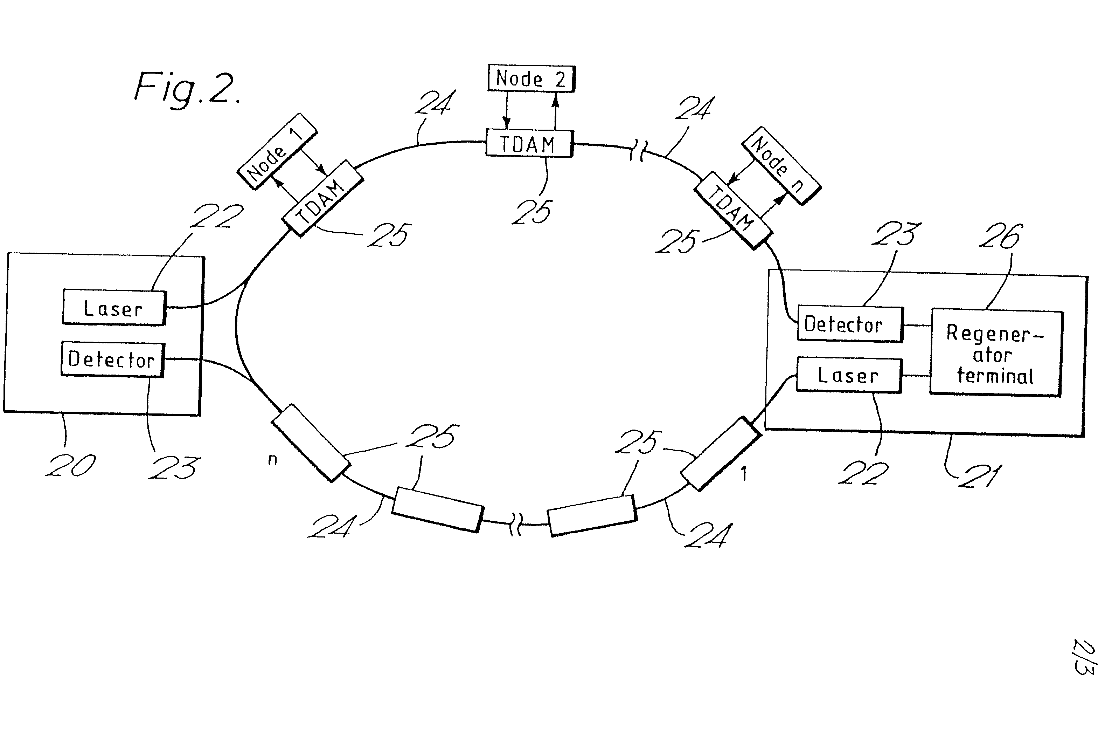

An optical fibre network, for instance an optical fibre local area network (LAN), typically has many modes 'wired' in series. Many, but not all, of the nodes of such a network may be provided by a TDAM device connected into the network in the manner depicted in Figure 1. An example of such a network is illustrated in Figure 2. In this example just two of the nodes 20 and 21 employ conventional lasers 22 and detectors 23. These are linked by optical fibre 24 with the remaining 2n nodes in which lasers and detectors have been replaced by TDAM devices 25, each having the general construction of the device of Figure 1. Node 20 may be a gateway terminal node that links with other ring networks (not shown), while node 21 is represented as a node incorporating a regenerator terminal 26.

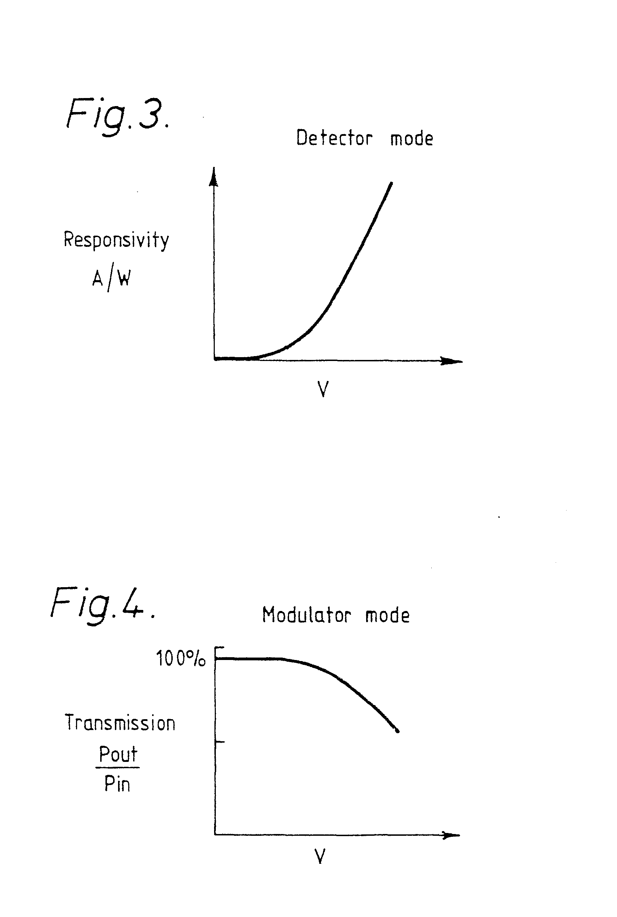

The characteristics of the TDAM device of Figure 1 in detector mode and in modulator mode are depicted respectively in Figures 3 and 4. With no voltage applied across the device its transmissivity is high, and thus the device allows a high proportion of light launched into the core 8 of either one of the fibres 6 and 7 to be transmitted straight through the device and into the core of the other fibre. In its use in an optical fibre network this property is most important insofar as it means that, in the event of a power failure at any one of the TDAM devices, light is still able to pass through that device for onward transmission to further detection devices. As the voltage across the device is increased, so it begins to absorb an increasing proportion of the light launched into it. The absorbed light is efficiently converted into current so that any signal on the light stream can be detected. In the detection mode the TDAM device is powered with just sufficient voltage applied across it to pick up sufficient signal for error free detection. Rapid automatic feedback control of the voltage is used for this purpose. In this way there is the minimum possible loss of optical power at each node, and the remainder is transmitted on to the next mode.

The inboard ends of fibres 6 and 7, when butted against the opposite faces of the TDAM device, will typically be spaced by approximately 0.1 mm. Assuming a value of refractive index for the intervening medium of about 3.6, it can be shown that the calculated diffraction loss for light launched from one fibre to the other is only about 0.2 dB. This loss could be reduced by including weak lenses (not shown) on the ends of the fibres for collimation purposes. Another source of loss is Fresnel reflection loss at the interfaces, but this can be reduced by the provision of appropriate antireflection coatings (not shown). Additionally there will be losses associated with misalignment of the two fibres, residual optical absorption or scattering in the semiconductor material and imperfections in the antireflection coatings. In practice allowance must also be made for transmission losses along the fibre extending between adjacent TDAMs and all connections or splices included in that path.

Table I shows the maximum number of nodes that can be 'wired' in series assuming various values for the transmission and absorbed (detected) optical power. This was calculated numerically assuming 1 mW mean launched power.

Table I    Maximum number of TDAM devices of detecting the signal from 1 mW Launched Power

| TRANSMISSION | | DETECTED SIGNAL POWER (nW) | | |
|---|---|---|---|---|
| % | dB | 1000 | 100 | 10 |
| 50 | -3 | 10 | 14 | 17 |
| 80 | -1 | 25 | 36 | 46 |
| 90 | -0.5 | 45 | 67 | 89 |
| 95 | -0.2 | 78 | 123 | 168 |

From this table it is seen that even with insertion losses as high as 3dB the TDAM device is potentially useful for broadcasting a signal to a set of ten or more receivers.

In its modulation mode, the device is driven with a larger electrical signal voltage to modulate the light transmitted through the TDAM (Figure 4). This modulation might for instance take the form of a relatively low bandwidth envelope modulation superimposed on the high speed digital bit stream propagation around the ring. This signal would be detected at the terminal nodes and retransmitted in full binary digital form. Alternatively, if the TDAM device has sufficient modulation bandwidth it could be used to directly modulate the amplitude of a series of binary '1's transmitted by the laser transmitter for this purpose. These '1's could be added to the standard transmitted word of the laser transmitter or time division multiplexed in some other way.

Using TDAM devices of the kind described in the above-referenced paper by Y. Horikoshi and K. Ploog, it is possible to vary the responsivity, and hence the absorption, from $10^{-4}$ to 0.2 for an applied lateral voltage of about 200 V across a 1mm diameter device. The device is believed to operate by reduction of the effective bandgap as the electric field across the device is increased. (Franz Keldysh effect). The operating

voltage is low because of the strong built in field provided by the doping superlattice. The Franz-Keldysh effect is normally regarded so small that efficient detectors or modulators can only be made using by propagating light laterally along the plane of the pn junction. The use of a multilayer superlattice structure allows the effect to be repeated many times on light travelling perpendicular to the layers. The high losses associated with optical coupling in to and out of lateral waveguides can thus be avoided. The particular device reported in the above-referenced paper is made of GaAs and will operate best at about 1.15 $\mu$m wavelength. Operation can be optimised to about 1.3 $\mu$m wavelength by using higher doping levels in the superlattice or by using GaInAsP as the base semiconductor with a bandgap set to absorb light with wavelengths less than about 1.2 $\mu$m. Such superlattices are therefore particularly appropriate for use as TDAM's.

In the device of Figure 1 the p- and n-type layers are directly interleaved. This structure can however be modified by the inclusion of a layer of intrinsic or compensated material between each p- and n-type layer. These additional layers may be of the same material (excluding doping) as the layers they separate or they may be of lower band gap material. For example, the device may be formed of alternate layers of p- and n-type GaAlAs separated by layers of intrinsic GaAs. An advantage of such an arrangement is that with it a high and substantially uniform field is capable of being applied to the maximum volume of active material thereby resulting in improved efficiency.

CLAIMS:-

1.       An optical fibre network component for connection between an electro-optical source and a detector, characterised in that said component includes an optical fibre coupling in which the end of one optical fibre is optically coupled with the end of another through the layers of a multi-layer semiconductive structure having a stack of electrically commoned sub-micron thickness p-type layers interleaved with a stack of electrically commoned sub-micron thickness n-type layers, said structure constituting a transmissive detector and modulator (TDAM) device.

2.       An optical fibre network component as claimed in claim 1, wherein the end faces of the fibres directly abut the semiconductive structure.

3.       An optical fibre network component as claimed in claim 1 or 2, wherein the p-type and n-type layers are spaced by layers of intrinsic or compensated material.

4.       An optical fibre network component as claimed in claim 3, wherein the layers of intrinsic or compensated material are of lower band gap material than that of the p- and n-type layers.

5.       An optical fibre network component as claimed in any preceding claim, wherein the TDAM device is a single crystal doping superlattice semiconductor device.

6.       An optical fibre network component as claimed in any preceding claim wherein the optical fibres are single mode fibres.

7.       An optical fibre network incorporating at least one component as claimed in any preceding claim in an optical fibre path optically coupling an optical source with an optical detector.

8.       An optical fibre network incorporating two or more components as claimed in any claim of claims 1 to 6, connected in cascade in an optical fibre path optically coupling an optical source with an optical detector.

9.        An optical fibre network as claimed in claim 7 or 8, wherein said optical detector is constituted by a further TDAM device.

10.       An optical fibre network as claimed in claim 8 or 9, which network is a distribution network in which all the TDAM devices function solely as transmissive detectors.

11.       An optical fibre network as claimed in claim 8 which network forms part of a ring configuration network.

Fig.1.

020850

Fig.2.

Fig.3.

Detector mode

Responsivity
A/W

V

Fig.4.

Modulator mode

100%

Transmission
$\dfrac{Pout}{Pin}$

V